(19) Europäisches Patentamt

European Patent Office

Office européen des brevets

(11) Veröffentlichungsnummer: **0 322 513 B1**

(12) **EUROPÄISCHE PATENTSCHRIFT**

(45) Veröffentlichungstag der Patentschrift: **06.05.92**

(21) Anmeldenummer: **88114648.4**

(22) Anmeldetag: **08.09.88**

(51) Int. Cl.⁵: **B23B 31/02**

(54) **Selbstspannendes Bohrfutter.**

(30) Priorität: **31.12.87 DE 3744589**

(43) Veröffentlichungstag der Anmeldung:
**05.07.89 Patentblatt 89/27**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI NL SE**

(56) Entgegenhaltungen:
**WO-A-86/03149**
**US-A- 4 695 065**

(73) Patentinhaber: **Josef Albrecht Bohrfutterfabrik
GmbH + Co
Antoniusstrasse 25
W-7314 Wernau(DE)**

(72) Erfinder: **Zimdars, Arno Werner
Burgstrasse 1
W-7302 Ostfildern(DE)**

(74) Vertreter: **Patentanwälte Dipl.-Ing. W. Scherrmann Dr.-Ing. R. Rüger
Webergasse 3 Postfach 348
W-7300 Esslingen (Neckar)(DE)**

EP 0 322 513 B1

## Beschreibung

Die Erfindung betrifft ein selbstspannendes Bohrfutter mit einem zumindest bereichsweise zylindrischen Grundkörper, der eine eingeschraubte koaxiale Druckspindel trägt, auf der formschlüssig mit ihr gekuppelte Spannbacken axial abgestützt sind, die in einem Backenträger geführt sind, welcher gemeinsam mit einem mit den Spannbacken zusammenwirkenden ringformigen Verschlußteil mit einer auf dem Grundkörper verdrehbar gelagerten Hülse drehfest verbunden ist, wobei zwischen der Hülse und dem Grundkörper eine in einem Drehsinn wirkende lösbare Sperreinrichtung angeordnet ist, durch die eine Relativverdrehung zwischen der Hülse und dem Grundkörper im Sinne des Lösens der Spannbacken sperrbar ist.

Ein selbstspannendes Bohrfutter dieser Art ist aus der EP-B1-0 017 748 bekannt.

Um ein unbeabsichtigtes Lösen des Verschlusses und damit der Spannbacken, bspw. beim abrupten Stillsetzen eines mit hoher Spindeldrehzahl arbeitenden Bohrfutters, etwa bei einer CNC-Bearbeitungsmaschine, zu verhüten, ist es bekannt (EP B1 0017 748), zwischen dem Grundkörper und der Hülse eine Sperreinrichtung in Gestalt eines Klinkengesperres anzuordnen, das den Grundkörper und die Spannhülse gegen Relativdrehungen im Sinne des Lösens der Spannbacken sperrt, Relativdrehungen im Sinne des Spannens aber unbehindert läßt, so daß die selbsttätige Nachspannfunktion des Bohrfutters erhalten bleibt. Die Anordnung ist dabei derart getroffen, daß auf einem mit der Hülse drehfest verbundenen Druckring, über den die Hülse axial an dem Grundkörper abgestützt ist, eine federbelastete Sperrklinke gelagert ist, die mit einem unmittelbar an dem Grundkörper angeordneten Zahnkranz zusammenwirkt. Um das Bohrfutter erforderlichenfalls öffnen zu können, ist eine Einrichtung zum Öffnen des Klinkengesperres vorhanden, die aus einem am rückwärtigen Ende der Hülse koaxial zu der Drehachse angeordneten, von außen verdrehbaren Lösering gebildet ist, der den Druckring übergreift und einen Anschlag für das entsprechende Sperrklinkenende aufweist. Ein im Prinzip ähnliches Bohrfutter mit einem solchen Klinkengesperre ist auch in der CH-PS 635 766 beschrieben.

Abgesehen davon, daß ein Klinkengesperre mit seiner beweglichen Sperrklinke einen beträchtlichen Platzbedarf aufweist, kann ein Klinkengesperre prinzipbedingt nur stufenweise arbeiten. Das bedeutet, daß auch die Spannsicherung nur stufenweise erfolgt, was unerwünscht ist.

Ein kurzbauendes Spannfutter, dessen Spannwirkung unabhängig von der Drehrichtung gewährleistet ist, ist aus der DD-PS 201 985 bekannt geworden, bei dem allerdings der die Druckspindel aufnehmende Grundkörper in dem zur Kupplung mit der Bohrspindel dienenden Steilkegel-Element verdrehbar gelagert ist, mit dem auch die Verschlußkappe unmittelbar verschraubt ist. Zum Spannen und Lösen des Bohrfutters kann der Grundkörper gegenüber dem Steilkegel-Element mittels eines Schneckentriebes verdreht werden, dessen Schnecke durch ein von außen her in einen Innensechskant einsteckbares Werkzeug betätigbar ist. Durch diesen Schneckentrieb geht aber die Selbstspannfunktion des Bohrfutters verloren; außerdem ist zur Betätigung ein eigenes Werkzeug erforderlich.

Ein nicht selbstspannendes Bohrfutter ist auch aus der WO 86/03149 bekannt, bei dem die Größe der auf einen gespannten Bohrer ausgeübten Spannkraft durch entsprechende Verdrehung eines Betätigungsringes verstärkt werden kann. Dieser Betätigungsring erlaubt es, einen hülsenförmigen Spannkörper zu verdrehen, der über eine eine große Übersetzung erzeugende Gewindeanordnung mit der mit den Spannbacken zusammenwirkenden Konushülse und dem Futterantriebskörper verbunden ist. Zwischen diesem, den Futterantriebskörper in größerem radialen Abstand umgebenden hülsenförmigen Spannkörper und dem Futterantriebskörper ist eine Schlingfeder mit zwei durch eine radial vorstehende Schlaufe getrennten Federabschnitten angeordnet, deren Schlaufe mit dem Spannkörper fest verbunden ist und deren beide Federenden wahlweise von dem Betätigungsring aus angesteuert werden können, um eine Verdrehung des Spannkörpers relativ zu dem Futterantriebskörper in der einen oder in der anderen Drehrichtung zu ermöglichen. Abgesehen davon, daß, wie erwähnt, dieses Bohrfutter keine selbstspannenden Eigenschaften aufweist, hat diese Schlingfeder mit ihrer Schlaufe einen verhältnismäßig großen radialen Platzbedarf.

Aufgabe der Erfindung ist es demgegenüber, ein selbstspannendes Bohrfutter zu schaffen, das in Kurzbauweise ausführbar eine werkzeuglose Bedienung der stufenlos wirkenden Spannsicherung gestattet.

Zur Lösung dieser Aufgabe ist das eingangs genannte Bohrfutter erfindungsgemäß dadurch gekennzeichnet, daß die Sperreinrichtung eine Schlingfederkupplung mit einer zu dem Grundkörper koaxialen Schlingfeder aufweist, deren Schlingfeder einander benachbarte koaxiale, rotationssymmetrische Bereiche des Grundkörpers und der Hülse oder mit diesem bzw. mit dieser drehfest verbundener Teile umschlingend angeordnet ist und der eine wahlweise betätigbare Löseeinrichtung zugeordnet ist.

Die Schlingfederkupplung zeichnet sich durch einen einfachen betriebssicheren Aufbau bei minimalem Platzbedarf aus. Gleichzeitig gewährleistet sie ein sicheres stufenloses Arbeiten der Spannsicherung.

Die Schlingfeder erlaubt nämlich aufgrund ihrer Eigenschaften eine Relativbewegung zwischen der Hülse und damit dem Backenträger und dem Grundkörper lediglich in einer Drehrichtung, und zwar in Spannrichtung. Damit kann das Bohrfutter während des Bohrvorgangs unbehindert selbsttätig nachspannen, während eine Relativdrehung zwischen der Hülse und dem Grundkörper in der entgegengesetzten Richtung reibschlüssig gesperrt ist.

Ein besonders einfacher und geschlossener Aufbau des Bohrfutters ergibt sich, wenn die Schlingfeder innerhalb der Hülse liegend angeordnet ist, wobei die Schlingfeder einen Bereich, insbesondere einen Bundbereich des Backenträgers umschlingend angeordnet sein kann. Die von der Schlingfeder umschlungenen Bereiche sind mit Vorteil zylindrisch und mit glatter, durchgehender Wandung ausgebildet. Es sind aber auch Ausführungsformen denkbar, bei denen diese Bereiche bspw. kegelig sind, wobei dann die Schlingfeder selbst entsprechend gestaltet ist.

Die Löseeinrichtung weist in einer bevorzugten Ausführungsform einen zu der Hülse koaxialen und relativ zu dieser verdrehbaren Betätigungsring auf, der mit einem Teil der Schlingfeder zusammenwirkend angeordnet ist. Dieser Betätigungsring kann unmittelbar auf der Hülse drehbar gelagert sein und mit Vorteil auf seiner Innenseite mit einem Teil der Schlingfeder zusammenwirkende Lösemittel aufweisen, so daß die Lösemittel und auch die Schlingfeder selbst nach außen zu völlig abgedeckt sind. Diese Lösemittel können zweckmäßigerweise eine zu der Ringachse exzentrische Nockenbahn aufweisen. Außerdem kann die Schlingfeder mit einem mit dem Betätigungsring zusammenwirkenden Endteil durch eine entsprechende Öffnung der Hülse durchgeführt sein, die dann ihrerseits durch den Betätigungsring wieder abgedeckt ist. Das Eindringen von Schmutz etc. in das Bohrfutter ist damit ausgeschlossen.

Das durchgeführte Endteil der Schlingfeder ist vorteilhafterweise abgebogen, während dem Betätigungsring Anschlagmittel zugeordnet sein können, durch die dessen Drehbeweglichkeit begrenzt ist.

In der Zeichnung ist ein Ausführungsbeispiel des Gegenstandes der Erfindung dargestellt. Es zeigen:

Fig. 1 ein Bohrfutter gemäß der Erfindung, in sogenannter Kurzbauweise, in einer Seitenansicht, teilweise aufgeschnitten und teilweise im axialen Schnitt,

Fig. 2 den Grundkörper, die Hülse und den Backenträger mit der zugeordneten Sperreinrichtung des Bohrfutters nach Fig. 1, in einer Seitenansicht, teilweise aufgeschnitten,

Fig. 3 die Anordnung nach Fig. 2, geschnitten längs der Linie III-III der Fig. 2, in einer Seitenansicht,

Fig. 4 das Bohrfutter nach Fig. 1 im auseinandergenommenen Zustand, in einer perspektivischen Explosionsdarstellung,

Fig. 5 den Betätigungsring des Bohrfutters nach Fig. 1, in einer Draufsicht,

Fig. 6 den Betätigungsring nach Fig. 5, geschnitten längs der Linie VI-VI der Fig. 5, in einer Seitenansicht, und

Fig. 7 einen Ausschnitt des Betätigungsringes nach Fig. 5, in dem Bereich VII der Fig. 5, in einer Draufsicht und in einem anderen Maßstab.

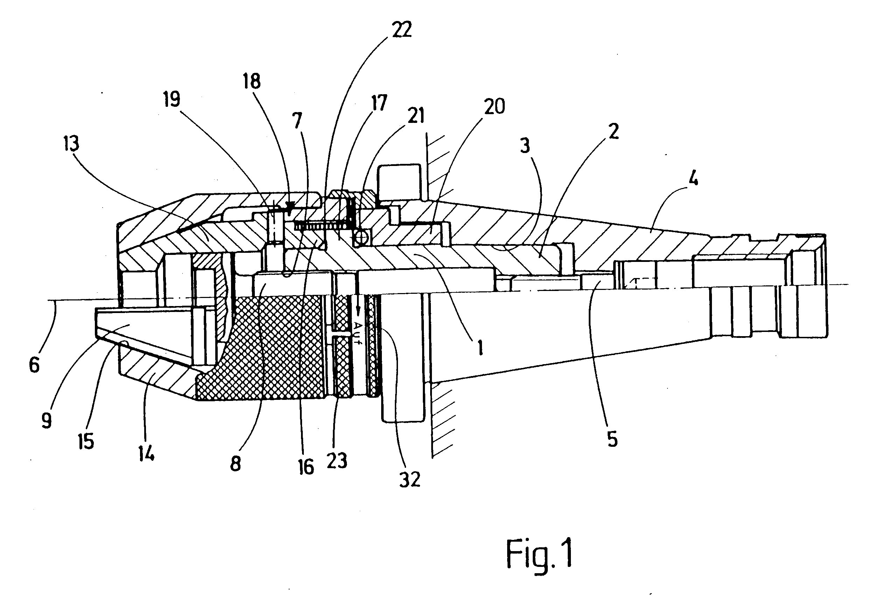

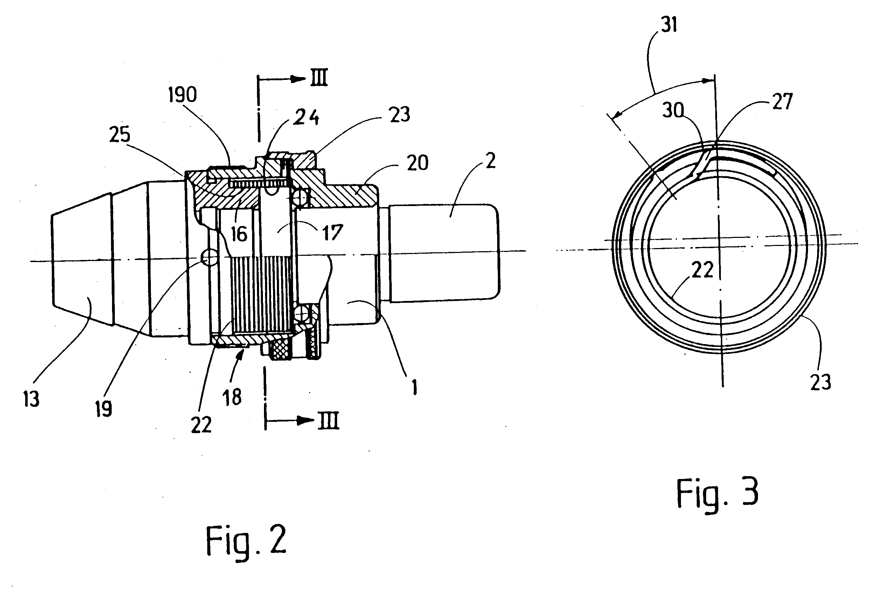

Das selbstspannende Bohrfutter weist einen im wesentlichen zylindrischen Grundkörper 1 auf, der mit einem kegeligen Zapfen 2 in eine entsprechende koaxiale Bohrung 3 eines Steilkegels 4 eingesetzt und mit diesem über eine Innensechskantschraube 5 drehfest verbunden ist. In eine zu der Drehachse 6 koaxiale Gewindebohrung 7 des Grundkörpers 1 ist eine Druckspindel 8 eingeschraubt, auf der axial Spannbacken 9 abgestützt sind, von denen in den Fig. 1,2 lediglich einer dargestellt ist. In Fig. 1 ist der oberhalb der Symmetrielinie in der Schnittdarstellung liegende Spannbacken der besseren Klarheit wegen weggelassen.

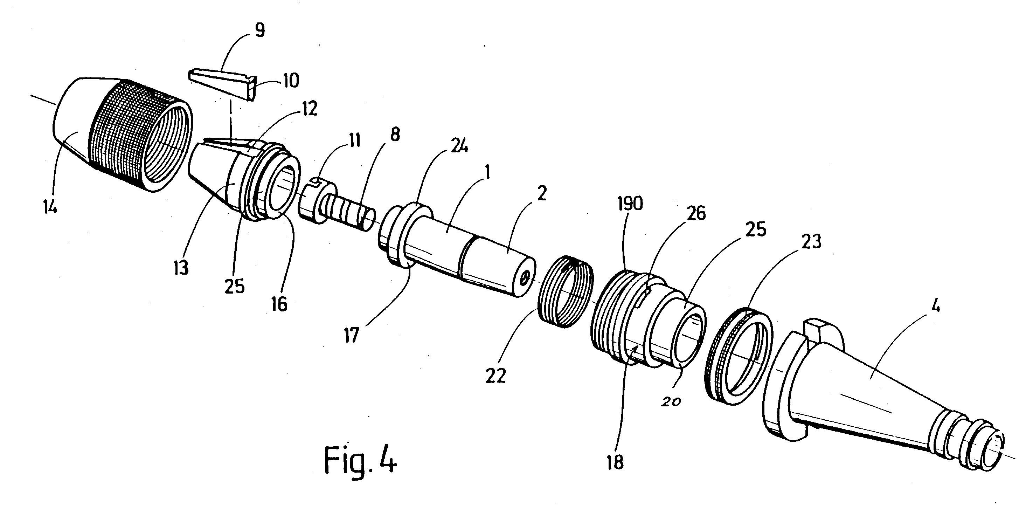

Die Spannbacken 9 sind endseitig bei 10 über Schiebeführungen 11 drehfest und radial verschieblich mit der Druckspindel 8 gekuppelt; sie sind in entsprechenden Führungsnuten 12 (Fig. 4) eines Backenträgers 13 gelagert, welcher von einer Verschlußhülse 14 umgeben ist, die über eine Innenkonusfläche 15 in an sich bekannter Weise radial mit den Spannbacken 9 zusammenwirkt.

Der Backenträger 13 ist mit einem innenzylindrischen Bund 16 auf dem Grundkörper 1 verdrehbar gelagert und axial gegen eine an dem Grundkörper 1 angeformte Ringschulter 17 abgestützt. Auf ihm ist endseitig eine zu der Drehachse 6 koaxiale Hülse 18 mit enger Passung aufgeschoben, die mit dem Backenträger 13 bei 19 drehfest verstiftet ist. Auf ein Außengewinde 190 der Hülse 18 ist die Verschlußhülse 14 aufgeschraubt. Zwischen einem auf dem Grundkörper 1 verdrehbar gelagerten Hülsenteil 20 und der Ringschulter 17 sind Wälzkörper 21 angeordnet, die gemeinsam mit der diesen gegenüberliegenden Ringfläche der Ringschulter 17 die Hülse 18 und den Backenträger 13 an dem Grundkörper 1 in Achsrichtung abstützen, derart, daß die Ringschulter 17 zwischen dem Backenträger 13 und der Hülse 18 axial eingeschlossen ist.

Zwischen dem Grundkörper 1 und der Hülse 18 bzw. dem Backenträger 13 ist eine in einem Drehsinn, und zwar in Spannrichtung wirkende lösbare Sperreinrichtung angeordnet, die eine Relativdrehung zwischen der Hülse 18 und dem Grundkörper 1 in Spannrichtung gestattet und in der Gegenrichtung, d.h. im Sinne des Lösens der Spannbacken 9 sperrt.

Diese Sperreinrichtung ist nach Art einer Schlingfederkupplung ausgebildet, welche eine zu dem Grundkörper 1 koaxiale Schlingfeder 22 aufweist, der eine von außen her wahlweise betätigbare Löseeinrichtung mit einem koaxialen, auf der Hülse 18 verdrehbar gelagerten Betätigungsring 23 zugeordnet ist.

Die Schlingfeder ist in der insbesondere aus den Fig. 1,2 ersichtlichen Weise derart angeordnet, daß sie einerseits die zylindrische, durchgehend glatte Außenumfangsfläche 24 der Ringschulter 17 und andererseits eine ebenfalls durchgehend glatte zurückgesetzte Zylinderfläche 25 an dem Bund 16 des Backenträgers 13 umschlingt. Die beiden Zylinderflächen 24, 25 sind einander unmittelbar benachbart; sie weisen den gleichen Durchmesser auf. Ersichtlich ist die Anordnung damit derart getroffen, daß die Schlingfeder 22 innerhalb der Hülse 18 liegt, von der sie vollständig umgeben ist. In der Hülse 18 ist eine schlitzartige Öffnung 26 (Fig. 4) ausgebildet, durch die ein abgebogenes Endteil 27 (Fig. 3) der Schlingfeder nach außen geführt ist. Die Öffnung 26 liegt innerhalb des Betätigungsringes 23 und ist deshalb durch diesen nach außen hin abgedeckt.

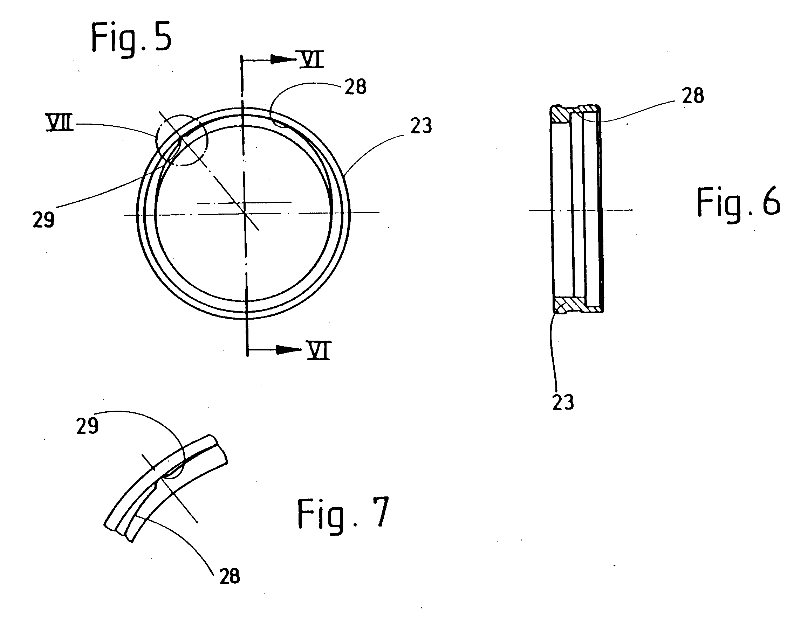

Der Betätigungsring 23 ist auf seiner Innenseite mit mit dem abgebogenen Endteil 27 der Schlingfeder 22 zusammenwirkenden Lösemitteln ausgestattet, die in Gestalt einer exzentrischen Nockenbahn 28 (Fig. 5 bis 7) ausgebildet sind. Im zusammengesetzten Zustand liegt die Schlingfeder 27 mit ihrem abgebogenen Endteil 27 auf der Höhe der Nockenbahn 28 (Fig. 3). Auf einer Seite ist die Nockenbahn mit einer rinnenartigen Vertiefung 29 versehen, in die in einer "Zu"-Stellung des Betätigungsringes 23 das abgebogene Endteil 27 der Schlingfeder 2 mit einer Schulter 30 (Fig. 3) liegen kann und die damit Anschlagmittel bildet, durch die der Verdrehbereich des Betätigungsringes 23 auf der Hülse 18 auf den in Fig. 3 bei 31 angedeuteten Winkelbereich auf der einen Seite begrenzt ist. Die Begrenzung des Winkelbereichs 31 auf der anderen Seite ist dadurch gegeben, daß das abgebogene Endteil 27 der Schlingfeder 22 bei 30 zwischen der keilförmig nach innen laufenden Nockenbahn 28 und der Zylinderfläche 24 der Ringschulter 17 eingeklemmt wird und damit ein Weiterdrehen des Betätigungsringes 23 verhindert. Auf der Außenseite des Betätigungsringes 23 angeordnete Markierungen, von denen eine bei 32 in Fig. 1 angedeutet ist, zeigen sinnfällig die "geöffnete" und die "geschlossene" Stellung des Betätigungsringes 23 an.

Bei in der "Zu"-Stellung stehendem Betätigungsring 23 kann zufolge des entsprechend gewählten Wickelsinnes der Schlingfeder 22 die Hülse 18 mit dem Backenträger 13 und der Verschlußhülse 14 im Spannsinn unbehindert gegenüber dem Grundkörper 1 verdreht werden. Damit bleibt auch die selbsttätige Nachspannwirkung des Bohrfutters voll erhalten. Eine Relativverdrehung der Hülse 18 und der mit dieser drehfest verbundenen Teile im entgegengesetzten, dem Lösesinne, ist aber durch die Schlingfeder 22 reibschlüssig gesperrt. Damit ist auch ein unbeabsichtigtes Lösen der Werkzeugspannung, bspw. durch Vibrationen oder abruptes Stillsetzen der Bohrspindel, ausgeschlossen.

Um die Werkzeugspannung zu lösen, wird der Betätigungsring 32 in die Stellung "Auf" nach Fig. 3 verdreht. Die Schlingfeder 22 wird dabei mit ihrer Schulter 30 etwas entgegen dem Wickelsinn der Schlingfeder 22 verschoben und gleichzeitig radial nach innen gedrückt, womit die von der Schlingfeder 22 ausgeübte Sperrwirkung in der bei solchen Schlingfederkupplungen üblichen Weise gelöst wird. Damit kann die Hülse 28 mit dem Backenträger 13 und der Verschlußhülse 14 im Lösesinn gegenüber dem Grundkörper 1 verdreht werden, bis das gespannte Werkzeug frei ist.

Bei dem beschriebenen Ausführungsbeispiel ist die Schlingfeder 22 zwischen der Ringschulter 17 des Grundkörpers 1 und dem Bund 16 des Backenträgers 13 angeordnet. Grundsätzlich sind auch Ausführungsformen denkbar, bei denen die Schlingfeder 22 unmittelbar mit einer entsprechenden Fläche der Hülse 18 oder einem anderen mit dieser drehfest verbundenen Teil zusammenwirkt. In einer abgewandelten Ausführungsform könnte außerdem die Anordnung derart getroffen sein, daß die Schlingfeder 22 nicht unmittelbar ein Teil des Grundkörpers 1 umschlingt, sondern ein mit diesem verbundenes Teil oder Element.

## Patentansprüche

1. Selbstspannendes Bohrfutter mit einem zumindest bereichsweise zylindrischen Grundkörper (1), der eine eingeschraubte koaxiale Druckspindel (8) trägt, auf der formschlüssig mit ihr gekuppelte Spannbacken (9) axial abgestützt sind, die in einem Backenträger (13) geführt sind, welcher gemeinsam mit einem mit den Spannbacken zusammenwirkenden ringförmigen Verschlußteil (14) mit einer auf dem Grundkörper verdrehbar gelagerten Hülse (18) drehfest verbunden ist, wobei zwischen der Hülse und dem Grundkörper eine in einem Drehsinn wirkende lösbare Sperreinrichtung angeordnet ist, durch die eine Relativverdrehung zwischen der Hülse und dem Grundkörper im Sinne des Lösens der Spannbacken sperrbar ist, **dadurch gekennzeichnet,** daß die Sperreinrichtung eine Schlingfederkupplung mit einer zu dem Grundkörper (1) koaxialen Schlingfeder (22) aufweist, deren Schlingfeder einander benachbarte, koaxiale, rotationssymmetrische Bereiche (24, 25) des Grundkörpers (1) und der Hülse (18) oder mit diesem bzw. mit dieser drehfest verbundener Teile (bspw. 13) umschließend angeordnet ist und der eine wahlweise betätigbare Löseeinrichtung (23, 28) zugeordnet ist.

2.  Bohrfutter nach Anspruch 1, dadurch gekennzeichnet, daß die Schlingfeder (22) innerhalb der Hülse (18) liegend angeordnet ist.

3.  Bohrfutter nach Anspruch 1 oder 2, dadurch gekennzeichnet, daß die Schlingfeder (22) einen Bereich (16) des Backenträgers (13) umschlingend angeordnet ist.

4.  Bohrfutter nach einem der vorhergehenden Ansprüche, dadurch gekennzeichnet, daß die von der Schlingfeder (22) umschlungenen Bereiche (24,25) zylindrisch sind.

5.  Bohrfutter nach einem der vorhergehenden Ansprüche, dadurch gekennzeichnet, daß die Löseeinrichtung einen zu der Hülse (18) koaxialen und relativ zu dieser verdrehbaren Betätigungsring (23) aufweist, der mit einem Teil (27) der Schlingfeder (22) zusammenwirkend angeordnet ist.

6.  Bohrfutter nach Anspruch 5, dadurch gekennzeichnet, daß der Betätigungsring (23) auf der Hülse (18) drehbar gelagert ist.

7.  Bohrfutter nach Anspruch 5 oder 6, dadurch gekennzeichnet, daß der Betätigungsring (23) auf seiner Innenseite mit einem Teil (27) der Schlingfeder (22) zusammenwirkende Lösemittel (28) aufweist.

8.  Bohrfutter nach Anspruch 7, dadurch gekennzeichnet, daß die Lösemittel eine zu der Ringachse exzentrische Nockenbahn (28) aufweisen.

9.  Bohrfutter nach den Ansprüchen 4 und 7 oder 8, dadurch gekennzeichnet, daß Schlingfeder (22) mit einem mit dem Betätigungsring (23) zusammenwirkenden Endteil (27) durch eine entsprechende Öffnung (26) der Hülse (18) durchgeführt ist.

10. Bohrfutter nach Anspruch 9, dadurch gekennzeichnet, daß das Endteil (27) der Schlingfeder (22) abgebogen ist.

11. Bohrfutter nach einem der Ansprüche 5 bis 10, dadurch gekennzeichnet, daß dem Betätigungsring (23) Anschlagmittel (27, 30) zugeordnet sind, durch die dessen Drehbeweglichkeit in wenigstens einem Drehsinn begrenzt ist.

**Claims**

1.  A self-clamping drill chuck having a base member (1) cylindrical at least in zones and bearing a screwed-in coaxial pressure spindle (8) against which clamping jaws (9) positively coupled thereto bear axially which are guided in a jaw carrier (13) which, together with an annular closure member (14) cooperating with the clamping jaws, is non-rotatably connected to a sleeve (18) rotatably supported on the base member, a releasable locking means which operates in one direction of rotation being disposed between the sleeve and the base member and being effective to lock a relative rotation between the sleeve and the base member, characterized in that the locking means has a helical coil spring coupling having a helical coil spring (22) coaxial with the base member (1), the helical coil spring being disposed embracing adjacent coaxial rotation-symmetrical zones (22, 25) of the base member (1) and the sleeve (18) or members (e.g., 13) non-rotatably connected to the base member or the sleeve, an optionally actuable release means (23, 28) being associated with the helical coil spring.

2.  A drill chuck according to claim 1, characterized in that the helical coil spring (22) is disposed lying inside the sleeve (18).

3.  A drill chuck according to claims 1 or 2, characterized in that the helical coil spring (22) is disposed embracing a zone (16) of the jaw carrier (13).

4.  A drill chuck according to one of the preceding claims, characterized in that the zones (24, 25) embraced by the helical coil spring (22) are cylindrical.

5. A drill chuck according to one of the preceding claims, characterized in that the release means has an actuating ring (23) which is coaxial with the sleeve (18) and which can rotate in relation thereto and which is disposed to cooperate with a portion (27) of the helical coil spring (22).

6. A drill chuck according to claim 5, characterized in that the actuating ring (23) is rotatably mounted on the sleeve (18).

7. A drill chuck according to claims 5 or 6, characterized in that on its inside the actuating ring (23) has release means (28) cooperating with a portion (27) of the helical coil spring (22).

8. A drill chuck according to claim 7, characterized in that the release means have a cam (28) eccentric of the ring axis.

9. A drill chuck according to claims 4 and 7 or 8, characterized in that the helical coil spring (22) is passed through a corresponding opening (26) in the sleeve (18) with an end portion (27) cooperating with the actuating ring (23).

10. A drill chuck according to claim 9, characterized in that the end portion (27) of the helical coil spring (22) is bent.

11. A drill chuck according to one of claims 5 to 10, characterized in that associated with the atuating ring (23) are stop means (27, 30) effective to limit the rotatability of the ring in at least one direction of rotation.

**Revendications**

1. Mandrin porte-forêt à serrage automatique comportant un corps de base (1) partiellement cylindrique qui porte une vis de poussée (8) coaxiale qui est vissée dans celui-ci et sur laquelle prennent appui axialement des mors (9) couplés à la vis par liaison par obstacle et guidés à l'intérieur d'un porte-mors (13) qui, avec un élément de couverture (14) annulaire coopérant avec les mors, est solidaire en rotation d'un manchon (18) monté avec possibilité de rotation sur le corps de base, un dispositif de verrouillage débrayable qui agit dans un sens de rotation étant disposé entre le manchon et le corps de base et permettant d'empêcher une rotation relative entre le manchon et le corps de base dans le sens du desserrage des mors, caractérisé en ce que le dispositif de verrouillage comporte un accouplement à ressort enroulé avec un ressort enroulé (22) coaxial avec le corps de base (1) dans lequel le ressort enroulé entoure des parties (24, 25) symétriques de rotation, coaxiales, mutuellement voisines, du corps de base (1) et du manchon (18) ou de pièces (p.ex. 13) solidaires en rotation de ceux-ci et en ce qu'un dispositif de débrayage (23, 28) qui peut être actionné à la demande est associé audit ressort enroulé.

2. Mandrin porte-forêt selon la revendication 1, caractérisé en ce que le ressort enroulé (22) est monté à l'intérieur du manchon (18).

3. Mandrin porte-forêt selon la revendication 1 ou 2, caractérisé en ce que le ressort enroulé (22) est disposé de manière à entourer une partie (16) du porte-mors (13).

4. Mandrin porte-forêt selon l'une des revendications précédentes, caractérisé en ce que les parties (24, 25) entourées par le ressort enroulé (22) sont cylindriques.

5. Mandrin porte-forêt selon l'une des revendications précédentes, caractérisé en ce que le dispositif de débrayage présente une bague d'actionnement (23) coaxiale au manchon (18) et mobile en rotation par rapport à celui-ci qui coopère avec une partie (27) du ressort enroulé (22).

6. Mandrin porte-forêt selon la revendication 5, caractérisé en ce que la bague d'actionnement (23) est montée tournante sur le manchon (18).

7. Mandrin porte-forêt selon la revendication 5 ou 6, caractérisé en ce que la bague d'actionnement (23) comporte sur sa face intérieure des moyens de débrayage (28) qui coopèrent avec une partie (27) du ressort enroulé (22).

8. Mandrin porte-forêt selon la revendication 7, caractérisé en ce que les moyens de débrayage comportent une piste de came (28) excentrée par rapport à l'axe de la bague.

9. Mandrin porte-forêt selon les revendication 4 et 7 ou 8, caractérisé en ce que le ressort enroulé (22) comporte une partie terminale (27) qui coopère avec la bague d'actionnement (23) au travers d'une ouverture adaptée (26) du manchon (18).

10. Mandrin porte-forêt selon la revendication 9, caractérisé en ce que la partie terminale (27) du ressort enroulé (22) est recourbée.

11. Mandrin porte-forêt selon l'une des revendications 5 à 10, caractérisé en ce que des éléments formant butée (27, 30) qui limitent le déplacement en rotation dans au moins un sens de rotation sont associés à la bague d'actionnement (23).

Fig.1

EP 0 322 513 B1

Fig. 2

Fig. 3

EP 0 322 513 B1

Fig. 4

Fig.5

VI

28

VII

23

29

VI

28

Fig. 6

23

29

Fig. 7

28

EP 0 322 513 B1